# EUROPEAN PATENT APPLICATION

(11) **EP 4 748 704 A1**
(43) Date of publication of application: **27.05.2026**
(21) Application number: 23945444.0
(22) Date of filing: 19.07.2023
(51) Int. Cl.: B64C 1/36, B64U 20/80, B64D 47/00

(54) **AIRCRAFT, AIRCRAFT SYSTEM, BATTERY, MOVABLE PLATFORM, AND MOVABLE PLATFORM SYSTEM**

(71) Applicant: SZ DJI Technology Co., Ltd., 518000 Shenzhen (CN)
(72) Inventor: CHEN, Tianyi, Shenzhen, Guangdong 518000 (CN); YANG, Dongyu, Shenzhen, Guangdong 518000 (CN); CHEN, Jianhong, Shenzhen, Guangdong 518000 (CN); LI, Yijun, Shenzhen, Guangdong 518000 (CN); WU, Qiongwei, Shenzhen, Guangdong 518000 (CN); LIU, Yifen, Shenzhen, Guangdong 518000 (CN); MA, Chao, Shenzhen, Guangdong 518000 (CN)
(74) Representative: Goddar, Heinz J.
(86) International application number: PCT/CN2023/108104
(87) International publication number: WO 2025/015552

(57) **Abstract**

The present disclosure discloses an aerial vehicle, an aerial vehicle system, a battery, and a movable platform. The aerial vehicle can communicate with an external device through a first communication apparatus and/or a second communication apparatus. The aerial vehicle can access a first communication network through the first communication apparatus and access a second communication network through the second communication apparatus. The first communication network is different from the second communication network. The aerial vehicle includes an accommodation space arranged at the housing of the aerial vehicle. At least a part of the first communication apparatus is quickly arranged into and removed from the accommodation space. Thus, the first communication apparatus does not have a greater impact on the shape of the aerial vehicle. The aesthetic of the appearance of the aerial vehicle can be ensured, and the impact of the first communication apparatus on the flight performance of the aerial vehicle can be reduced.

## Description

### TECHNICAL FIELD

The present disclosure relates to the electronic device technology field and, more particularly, to an aerial vehicle, an aerial vehicle system, a battery, a movable platform, and a movable platform system.

### BACKGROUND

In related technologies, an aerial vehicle conducts wireless communication with a ground station through a communication apparatus. Since flight distance, obstacle, and etc. negatively impact the communication quality, to improve communication reliability, the aerial vehicle usually includes more than one communication apparatus. In the related technologies, the communication apparatus is arranged externally at the aerial vehicle. However, the externally arranged communication apparatus affects the outlook of the aerial vehicle, and changes the shape of the aerial vehicle, which interferes with the air resistance of the aerial vehicle to impose a negative impact on the performance of the aerial vehicle.

Additionally, as a power supply apparatus for a movable platform such as an aerial vehicle or a robot, a battery needs to continuously provide electrical power when the movable platform moves, resulting continuous generation of heat. In the related technology, a fan is usually provided to dissipate heat for the battery, which increases the volume and weight of the movable platform.

### SUMMARY

Thus, the present disclosure provides an aerial vehicle, an aerial vehicle system, a battery, a movable platform, and a movable platform system.

According to a first aspect of embodiments of the present disclosure, an aerial vehicle is provided. The aerial vehicle can communicate with an external device through a first communication apparatus and/or a second communication apparatus. The aerial vehicle can access the first communication network through the first communication apparatus and access the second communication network through the second communication apparatus. The first communication network is different from the second communication network. The aerial vehicle includes an accommodation space arranged at the housing of the aerial vehicle. At least a part of the first communication apparatus is quickly arranged into and removed from the accommodation space.

The technical solution of embodiments of the present disclosure can include the following beneficial effects.

The aerial vehicle can communicate with the external device through the first communication apparatus and/or the second communication apparatus. When the first communication apparatus is used, at least a part of the first communication apparatus can be accommodated within the accommodation space of the housing of the aerial vehicle. Therefore, the first communication apparatus does not significantly affect the shape of the aerial vehicle. Thus, the aesthetic appearance of the aerial vehicle can be ensured, and the impact of the first communication apparatus on the flight performance of the aerial vehicle can be reduced.

According to a second aspect of embodiments of the present disclosure, an aerial vehicle system is also provided. The aerial vehicle system includes the aerial vehicle of the first aspect and the first communication apparatus. At least a part of the first communication apparatus is quickly detachable from the aerial vehicle. The aerial vehicle accesses the first communication network through the first communication apparatus.

The technical solution of embodiments of the present disclosure may include the following beneficial effects.

When the aerial vehicle system is used, by connecting the first communication apparatus to the aerial vehicle, the aerial vehicle can access the first communication network. Since at least a part of the first communication apparatus can be accommodated in the accommodation space of the housing of the aerial vehicle, the first communication apparatus does not have a significant impact on the shape of the aerial vehicle. Thus, the aesthetic appearance of the aerial vehicle can be ensured, and the impact of the first communication apparatus on the flight performance of the aerial vehicle can be reduced.

According to a third aspect of embodiments of the present disclosure, a battery is also provided and is arranged at the movable platform to provide power to the movable platform. The battery includes a front wall, a rear wall opposite to the front wall, and side wall connecting the front wall and the rear wall. The movable platform includes a head, a tail opposite to the head, and a side connecting the head and tail. After the battery is arranged at the movable platform, the front wall faces the head, and the side wall faces the side. The front wall includes an air inlet, and the side wall is provided with an air outlet. The battery is provided with a heat dissipation structure. The heat dissipation structure includes a heat dissipation channel. When the movable platform moves, the airflow can enter the heat dissipation channel from the air inlet and flows out from the air outlet.

The technical solution of embodiments of the present disclosure may include the following beneficial effects.

When the battery is used, the heat dissipation structure inside the battery can use the airflow generated during the movement of the movable platform to allow the airflow to enter the heat dissipation channel through the front wall of the battery and flow out from the side wall of the battery. Thus, the heat inside of the battery can be quickly brought out without the help of another device. That is, the heat can be effectively dissipated for the battery.

According to a fourth aspect of embodiments of the present disclosure, a movable platform is also provided, which is powered by the battery. The movable platform includes a power system, and the battery of the third aspect to supply power to the power system.

The technical solution of embodiments of the present disclosure may include the following beneficial effects.

When the movable platform is in motion, the heat dissipation structure inside the battery can utilize the airflow generated during the movement of the movable platform to allow the airflow to enter the heat dissipation channel through the front wall of the battery and flows out from the side wall of the battery. Thus, the heat inside the battery can be quickly brought out without the help of another device. That is, the heat dissipation can be performed on the battery effectively and quickly.

According to a fifth aspect of embodiments of the present disclosure, a movable platform system is also provided and includes the movable platform and the battery of the third aspect. The movable platform includes a battery compartment, and the battery is arranged in the battery compartment to supply power to the movable platform.

The technical solution of embodiments of the present disclosure may include the following beneficial effects.

When the movable platform system is used, the battery can be arranged in the battery compartment of the movable platform. When the movable platform moves, the heat dissipation structure inside the battery can utilize the airflow generated during the movement of the movable platform to allow the airflow to enter the heat dissipation channel through the front wall of the battery to quickly bring out the heat inside the battery, without the help of another device. That is, the heat dissipation can be performed effectively and quickly on the battery.

It should be understood that the above general description and the following detailed description are exemplary and explanatory only and do not limit the present disclosure.

### BRIEF DESCRIPTION OF THE DRAWINGS

The accompanying drawings forming a part of the present disclosure are used for further understanding of the present disclosure. The exemplary embodiments and the description of the exemplary embodiments of the present disclosure are used to explain the present disclosure and do not limit the present disclosure.

To more clearly illustrate the technical solutions of embodiments of the present disclosure, a brief description of the accompanying drawings used in the description of embodiments of the present disclosure is provided below. Obviously, the accompanying drawings in the following description are merely some embodiments of the present disclosure. For those of ordinary skill in the art can obtain other accompanying drawings according to these accompanying drawings without creative efforts.
FIG. 1 is a schematic structural diagram of an aerial vehicle system after being assembled according to an embodiment of the present disclosure.
FIG. 2 is a schematic structural diagram of an aerial vehicle with a first communication apparatus arranged in the aerial vehicle according to an embodiment of the present disclosure.
FIG. 3 is schematic structural diagram of an aerial vehicle without a first communication apparatus according to an embodiment of the present disclosure.
FIG. 4 is a schematic exploded diagram of an aerial vehicle system according to an embodiment of the present disclosure.
FIG. 5 is a schematic top view of an upper housing when the aerial vehicle system of FIG. 4 is not assembled.
FIG. 6 is a schematic bottom view of the upper housing of FIG. 5.
FIG. 7 is a schematic structural diagram of a first communication apparatus or a signal processing module according to an embodiment of the present disclosure.
FIG. 8 is a schematic structural diagram of a signal processing module according to an embodiment of the present disclosure.
FIG. 9 is a schematic diagram showing a direction of a battery being mounted to an aerial vehicle according to an embodiment of the present disclosure.
FIG. 10 is a schematic structural diagram of the battery of FIG. 9.

**Reference numerals:**

| | | | | | |
|---|---|---|---|---|---|
| 1000 | Aerial vehicle system | 100 | Aerial vehicle | 200 | First communication apparatus |
| 300 | Second communication apparatus | | | 110 | Housing |
| 120 | Accommodation space | 113 | Groove | 101 | Top |
| 102 | Bottom | 103 | Head | 104 | Tail |
| 105 | Side | 121 | Position-limiting member | | |
| 130 | Cover | 202 | Second electrical connection member | | |
| 140 | First electrical connection member | | | 210 | First communication antenna |
| 220 | Signal processing module | 221 | Communication assembly | | |
| 222 | Matching network | 223 | Protection housing | 201 | Feed line |
| 2011 | First end | 2022 | Second end | | |
| 203 | Third electrical connection member | | | 111 | Upper housing |
| 112 | Lower housing | 211 | Ground member | 150 | Conductive plate |
| 151 | Conductive terminal | 152 | Heat conductor | | |
| 153 | Through-hole | 310 | Second communication | | antenna |
| 600 | Battery | 610 | Outer housing | 601 | Front wall |
| 602 | Rear wall | 603 | Side wall | 160 | Battery slot |
| 611 | Air inlet | 612 | Air outlet | 620 | Heat dissipation mechanism |
| 630 | Heat dissipation channel | 631 | Air inlet channel | 632 | Air outlet channel |
| 640 | Battery cell | | | | |

### DETAILED DESCRIPTION OF THE EMBODIMENTS

To make the objectives, technical solutions, and advantages of the present disclosure clearer, the present disclosure is further described in detail below in conjunction with the accompanying drawings and embodiments of the present disclosure. The embodiments described here are only intended to explain the present disclosure and do not limit the scope of the present disclosure.

Unless otherwise defined, all technical and scientific terms used here have the same meanings as commonly understood by those skilled in the art. The terms used in the specification of the present disclosure are only for the purpose of describing specific embodiments and are not intended to limit the present disclosure.

A movable platform such as an aerial vehicle, a vehicle, a ship, and a robot can provide more possibilities for manufacturing and life. The movable platform usually sends and receives information to and from the outside through a communication apparatus. Taking an aerial vehicle as an example, the aerial vehicle can conduct wireless communication with a ground station or another aerial vehicle in the air through a communication apparatus. Since the flight distance and obstacle can have a negative impact on the communication quality, to improve the communication reliability, the aerial vehicle usually includes more than one communication apparatus. For example, one communication apparatus can be arranged inside the aerial vehicle as a primary communication apparatus, and another communication apparatus can be arranged externally at the aerial vehicle as a secondary communication apparatus. However, the outlook of the aerial vehicle can be affected by the externally arranged communication apparatus, and meanwhile, the shape of the aerial vehicle can be affected by the externally arranged communication apparatus, which interferes with the air resistance of the aerial vehicle to bring a negative impact on the performance of the aerial vehicle.

Thus, an aerial vehicle system is provided. The aerial vehicle includes more than one communication apparatus arranged inside the aerial vehicle to improve the communication reliability of the aerial vehicle and have relatively small impacts on the outlook and performance of the aerial vehicle.

To better understand the aerial vehicle system of the present disclosure, as shown in the figures, an unmanned aerial vehicle is used as an example for detailed description. In some other embodiments, the aerial vehicle of the present disclosure can also include a manned aerial vehicle.

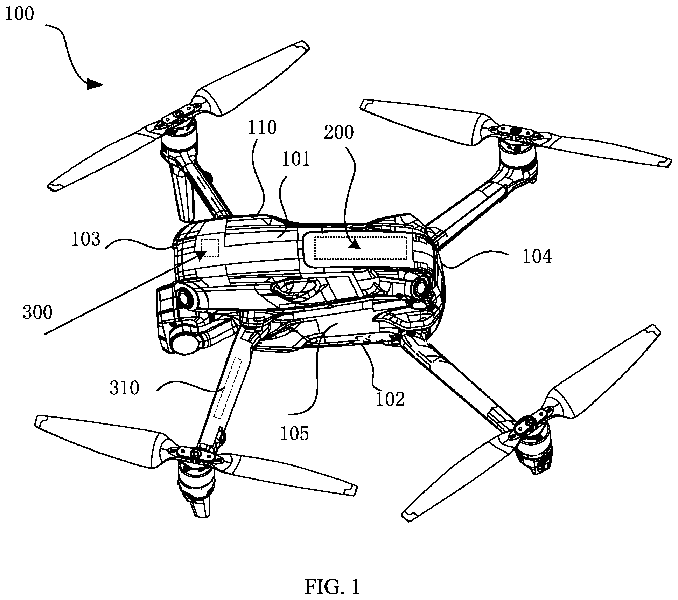

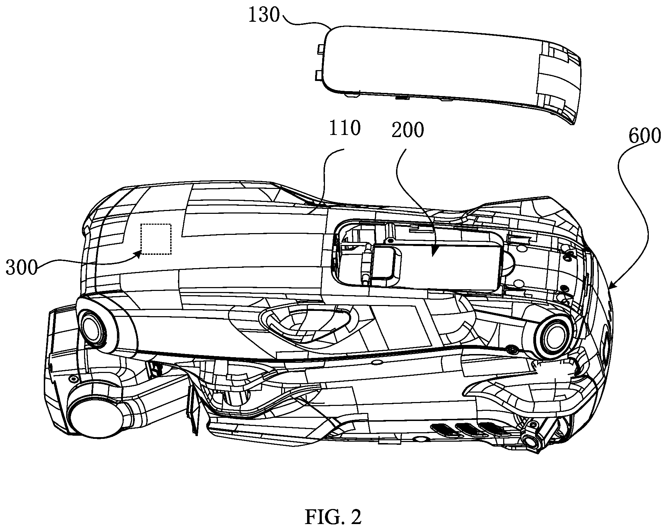

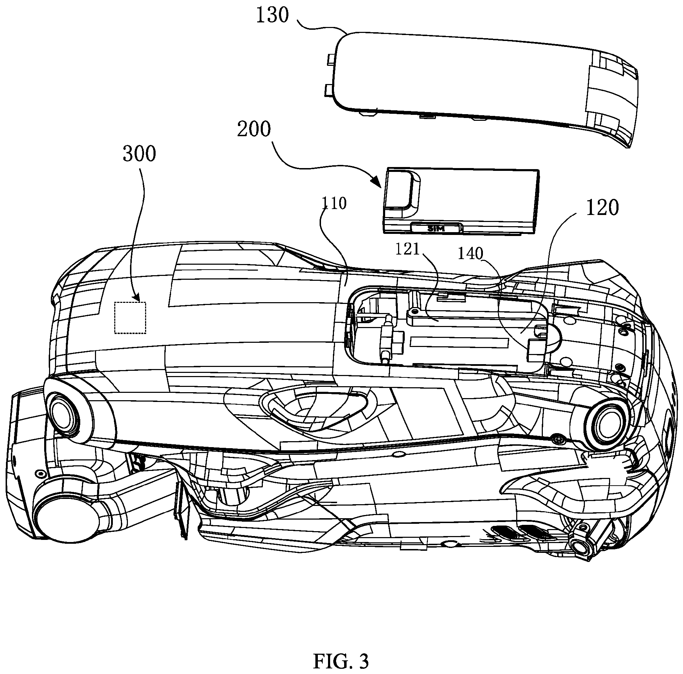

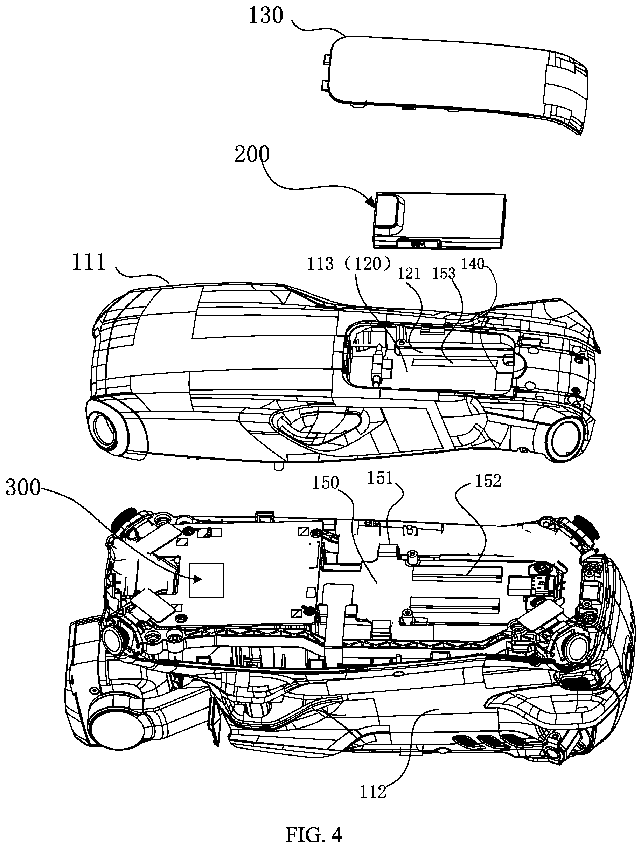

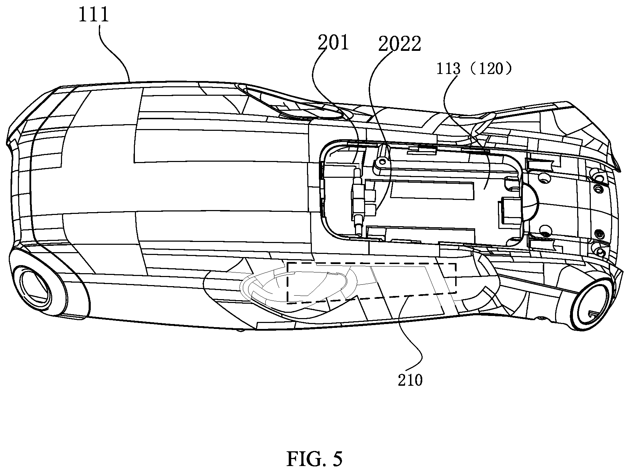

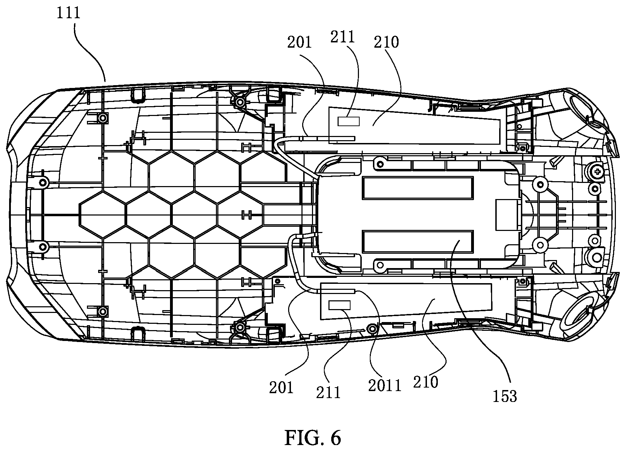

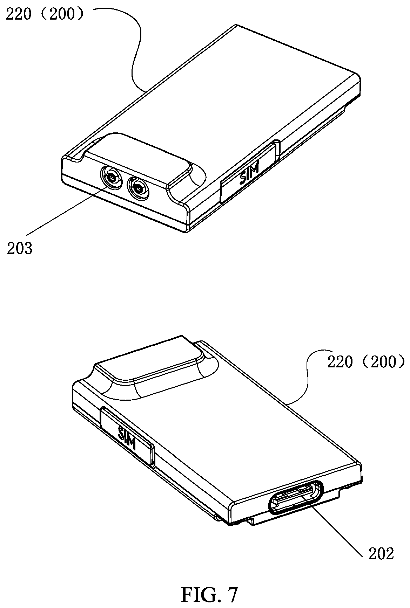

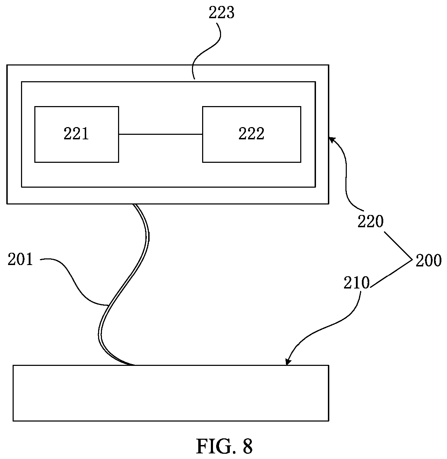

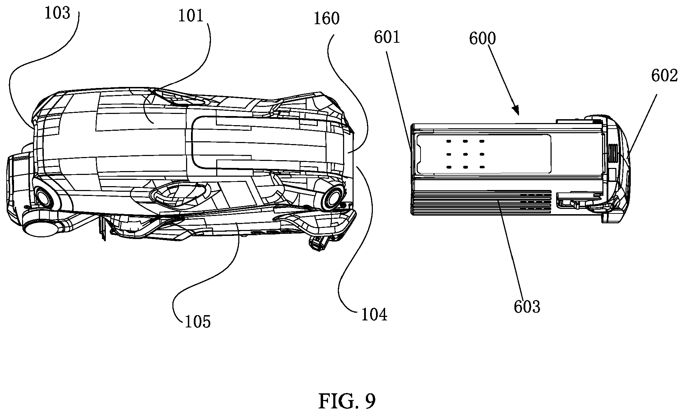

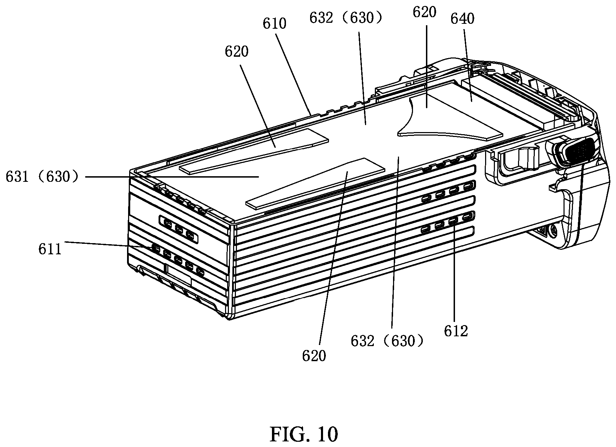

FIG. 1 is a schematic structural diagram of an aerial vehicle system after being assembled according to an embodiment of the present disclosure. FIG. 2 is a schematic structural diagram of an aerial vehicle with a first communication apparatus arranged in the aerial vehicle according to an embodiment of the present disclosure. FIG. 3 is a schematic structural diagram of the aerial vehicle without a first communication apparatus according to an embodiment of the present disclosure. FIG. 4 is a schematic exploded diagram of the aerial vehicle system according to an embodiment of the present disclosure. FIG. 5 is a schematic top view of an upper housing when the aerial vehicle system of FIG. 4 is not assembled. FIG. 6 is a schematic bottom view of the upper housing of FIG. 5. FIG. 7 is a schematic structural diagram of the first communication apparatus or a signal processing module according to an embodiment of the present disclosure. FIG. 8 is a schematic structural diagram of a signal processing module according to an embodiment of the present disclosure. FIG. 9 is a schematic diagram showing a direction of a battery being mounted to the aerial vehicle according to an embodiment of the present disclosure. FIG. 10 is a schematic structural diagram of the battery of FIG. 9.

As shown in FIGs. 1 to 3, embodiments of the present disclosure provide an aerial vehicle system 1000, including an aerial vehicle 100 and a first communication apparatus 200. The aerial vehicle 100 can access a first communication network through a first communication apparatus 200. The aerial vehicle 100 also includes a second communication apparatus 300, and the aerial vehicle 100 can also access a second communication network through the second communication apparatus 300. The aerial vehicle 100 includes a housing 110. The housing 110 includes an accommodation space 120. At least a part of the first communication apparatus 200 can be quickly arranged into and removed from the accommodation space 120.

The aerial vehicle 100 can communicate with an external device that also accesses the second communication network. After the first communication apparatus is installed, the aerial vehicle 100 can access the first communication network and communicate with the external device that also accesses the first communication network. The aerial vehicle 100 can also simultaneously access the first communication network and the second communication network, and communicate with an external device that also simultaneously accesses the first communication network and the second communication network.

Thus, when the aerial vehicle system 1000 is in use, at least a part of the first communication apparatus 200 can be arranged in the accommodation space 120 of the housing 110 of the aerial vehicle 100. Thus, the aerial vehicle 100 can access the first communication network through the first communication apparatus 200 and communicate with the external device that also accesses the first communication network. Then, the first communication apparatus 200 may not have a relatively large impact on the shape of the aerial vehicle 100, which ensures the aesthetic appearance of the aerial vehicle 100 and minimizes the impact of the first communication apparatus 200 on the flight performance of the aerial vehicle 100. Moreover, with the first communication apparatus 200, the aerial vehicle 100 can communicate with the external device through the first communication apparatus 200 and/or the second communication apparatus 300, which improves the communication reliability between the aerial vehicle 100 and the external device.

In addition, since the first communication apparatus 200 is detachably arranged at the aerial vehicle 100, the first communication apparatus 200 can be sold separately as an accessory or assembled with the aerial vehicle and sold as a whole. The user of the aerial vehicle can choose whether to install the first communication apparatus or rely on the second communication apparatus for communication according to communication capability requirements of daily flight. When the second communication apparatus meets the communication requirements, the aerial vehicle may not need to carry the first communication apparatus, which is beneficial to reduce the weight of the aerial vehicle and increase the battery life.

In some embodiments, the external device can be a ground station, a remote controller, a cloud terminal, etc.

In some embodiments, the external device can also include a third communication apparatus. The external device can access the first communication network through a third communication apparatus to communicate with the aerial vehicle that also accesses the first communication network. In some embodiments, the third communication apparatus and the first communication apparatus can be interchangeable. That is, the third communication apparatus can be removed from the external device and mounted in the accommodation space to allow the aerial vehicle to access the first communication network through the third communication apparatus. Then, after being removed from the aerial vehicle, the first communication apparatus can be mounted at the previous position of the third communication apparatus on the external device. Thus, the external device can communicate with the aerial vehicle through the first communication apparatus.

For example, in some embodiments, the aerial vehicle can be remotely controlled through a remote controller. An accommodation space can be also arranged at the remote controller to install the communication apparatus that causes the remote controller to access the first communication network. The communication apparatus can be the third communication apparatus similar to the first communication apparatus or the first communication apparatus. Such communication apparatus can be also mounted to the aerial vehicle to cause the aerial vehicle to access the first communication network. The first communication apparatus of the aerial vehicle can also be mounted at the remote controller to cause the remote controller to access the first communication network. Then, the versatility of the first communication apparatus can be improved, and the development cost of the first communication apparatus can be saved.

In some embodiments, the first communication network can be a public communication network. The public communication network can include, for example, a mobile communication network and a satellite communication network. The mobile communication network can include but is not limited to a 3G mobile communication network, a 4G mobile communication network, a 5G mobile communication network, a 5.5G mobile communication network, a 6G mobile communication network, etc. Since the wide coverage of the cellular mobile network is broad, and the cellular mobile network is not easy to be disturbed, when the aerial vehicle 100 communicates with the external device through the mobile communication network, long distance transfer can be realized. The satellite communication network can include the GPS communication network, the Beidou communication network, and the Starlink communication network. The second communication network can be a special communication network. For example, the private communication network can be established between the aerial vehicle 100 and the external device to perform the communication between the aerial vehicle 100 and the special external device. The special communication network can be a Lightbridge or OcuSync communication network. Since the special communication network has low time delay, no extra cost, and good privacy, when the aerial vehicle 100 is able to access the public communication network and the special communication network, the aerial vehicle 100 can first access the special communication network.

In some embodiments, after the first communication apparatus 200 is mounted at the aerial vehicle 100, the aerial vehicle 100 can communicate with the external device through the first communication network. After the first communication apparatus 200 is removed from the aerial vehicle 100, the aerial vehicle 100 can communicate with the external device through the second communication network. By detachably arranging the first communication apparatus 200 at the aerial vehicle 100, the aerial vehicle 100 can realize short distance communication through the second communication apparatus 300 when only the short distance communication is required, and the first communication apparatus 200 configured to provide long distance communication can be removed from the aerial vehicle 100. Then, the aerial vehicle can be lighter, and the operation time length of the aerial vehicle 100 can be improved.

In some embodiments, the aerial vehicle 100 can switch between the first communication network and the second communication network based on the communication quality with the external device. For example, the operator of the aerial vehicle 100 can manually switch between the first communication network and the second communication network based on the communication quality. In some embodiments, the aerial vehicle 100 can also automatically switch between the first communication network and the second communication network based on the communication quality.

In some embodiments, the aerial vehicle 100 can preferentially communicate with the external device through the second communication network. When the communication quality of the second communication network does not meet the requirement, the aerial vehicle 100 can automatically switch to the first communication network and communicate with the external device through the first communication network.

The communication quality can be used to rate the communication quality of the communication network, which can be rated through an uplink signal quality parameter and a downlink signal quality parameter. In some embodiments, the uplink signal quality parameter can include one or more of an uplink MCS (modulation and coding scheme), an uplink packet error count, an uplink signal-to-noise ratio, etc. In some embodiments, the downlink signal quality parameter can include a downlink signal-to-noise ratio, etc. The uplink MCS, uplink packet error count, and uplink signal-to-noise ratio can be dependent of each other. When one parameter changes, the other two parameters can usually change too. The uplink signal quality parameter and the downlink signal quality parameter are merely exemplary. Those skilled in the art can choose another uplink signal quality parameter and downlink signal quality parameter as needed, which is not limited here.

The first communication network and the second communication network can have different features. For example, the first communication network can be suitable for long-distance communication, and the second communication network can have low time delay. Thus, in some embodiments, the flight restriction when the aerial vehicle 100 communicates through the first communication apparatus 200 can be different from the flight restriction when the aerial vehicle 100 communicates through the second communication apparatus 300.

In some embodiments, the above flight restriction can include a flight location restriction, a flight altitude restrictions, a flight distance restriction, a flight speed restriction, etc. Since the first communication network, such as a cellular network, has the a broad coverage and is not easy to be interfered, the aerial vehicle 100 can communicate through the first communication apparatus 200 to ensure the communication reliability between the aerial vehicle and the external device at some flight locations such as in a dense skyscraper area having a large impact on the communication signal, when the aerial vehicle needs to fly a long distance like tens or even hundreds of kilometers, or during high-speed flight. In addition, when the first communication network is the satellite communication network, the aerial vehicle can communicate with the external device based on the satellite communication network in an area without the coverage of the cellular network, such as desserts, wilderness, sea areas, or an area with severe signal obstruction like forests. Therefore, when the aerial vehicle uses the first communication network or the second communication network, different flight restrictions can be applied to the aerial vehicle. When the aerial vehicle uses the first communication network, more flight locations can be available to the aerial vehicle, and higher flight altitudes, longer flight distances, and higher flight speeds can be allowed for the aerial vehicle.

In some embodiments, the status information of the aerial vehicle, the environment information collected by the aerial vehicle, and the control information of the external device can be transferred through the first communication apparatus 200 and/or the second communication apparatus 300.

In some embodiments, the status information of the aerial vehicle can include the altitude, speed, heading, and location of the aerial vehicle. The aerial vehicle can collect the above status information of the aerial vehicle through various sensors. In some embodiments, the environment information collected by the aerial vehicle can include an environmental image, a distance between the aerial vehicle and an object, etc. The aerial vehicle can capture images of areas of interest in the air or on the ground through a camera apparatus. The aerial vehicle can detect the distance information from the object through different sensors, such as a visual sensor, an ultrasound sensor, a radar (e.g., LiDAR), etc. In some embodiments, the control information of the external device can include a flight control instruction, a control instruction of a load carried by the aerial vehicle, etc. The ground station, remote controller, or cloud end can transmit the control instruction for the aerial vehicle through the first communication network and/or second communication network to control the aerial vehicle remotely, e.g., control the altitude, speed, heading, and flight route of the aerial vehicle. In some embodiments, the load carried by the aerial vehicle can be controlled by the external remote device such as the ground station, remote controller, or cloud end. The load can include a camera apparatus, a searchlight, a loudspeaker, a gimbal, a cargo box, etc. Correspondingly, the external device can control the camera apparatus to capture images, control the searchlight to turn on or adjust brightness for illumination, control the loudspeaker to play audio or adjust volume, control the gimbal to rotate to be at different attitudes, and control the cargo box for airdrop through the communication network.

The first communication network and the second communication network can have different features. For example, the first communication network can be suitable for long-distance communication, and the second communication network can have low time delay. Thus, in some embodiments, the content transmitted by the aerial vehicle 100 through the first communication apparatus 200 can be different from the content transmitted by the aerial vehicle 100 through the second communication apparatus 300.

In some embodiments, after the first communication apparatus 200 is mounted at the aerial vehicle 100, the aerial vehicle 100 can communicate with another aerial vehicle mounted with the first communication apparatus 200 through the first communication network. After the first communication apparatus 200 is mounted at the another aerial vehicle, the another aerial vehicle can also access the first communication network. The aerial vehicle can communicate with the another aerial vehicle accessing the first communication network. In some embodiments, the aerial vehicle can send the status information of the aerial vehicle, the environment information collected by the aerial vehicle, and the flight plan (e.g., flight route) of the aerial vehicle to the another aerial vehicle through the first communication network. Thus, the another aerial vehicle can know the situation of the aerial vehicle, which is beneficial for safe flight (e.g., avoidance) between the aerial vehicles and is also beneficial for the aerial vehicles to operate cooperatively to improve the operation efficiency.

When the aerial vehicle 100 communicates with another aerial vehicle through the first communication apparatus 200 via the first communication network, the first communication network can be encrypted. Thus, a plurality of aerial vehicles can communicate through the encrypted network. Then, each aerial vehicle can form a local area network (LAN) that serves an aerial vehicle with permission to access the first communication network to enable secure communication.

In some embodiments, an opening can be provided on the housing 110 of the aerial vehicle 100. The opening can cooperate with another member to form an accommodation space. In some embodiments, the housing can be recessed inward toward the aerial vehicle to form the accommodation space. As shown in FIG. 4, a groove 113 is provided. The groove 113 can form the accommodation space 120, which is configured to accommodate the first communication apparatus 200.

In some embodiments, as shown in FIG. 1, the aerial vehicle 100 includes a top 101, a bottom 102 opposite the top 101, a head 103, a rear member 104 opposite the head 103, and a side 105 connecting the top 101, bottom 102, head 103, and rear member 104. The accommodation space 120 can be arranged on the top 101, bottom 102, head 103, rear member 104, or side 105 of the aerial vehicle, which is not limited in the present disclosure.

In some embodiments, a sensor can be arranged at the bottom 102 of the aerial vehicle 100. The accommodation space 120 can be arranged at the top 101 of the aerial vehicle 100. Thus, more space can be reserved for the aerial vehicle to install the sensor. In addition, the distance between the sensor and the first communication apparatus can be relatively large, which avoids electromagnetic disturbance between the sensor and the first communication apparatus. For example, in some embodiments, various sensors, such as GPS, barometer, laser rangefinder, and fisheye camera, can be arranged at the bottom of the aerial vehicle. These sensors can be configured to detect the position and altitude of the aerial vehicle. When the bottom of the aerial vehicle does not include a sensor that is sensitive to the electromagnetic or does not have enough installation space, the accommodation space for installing the first communication apparatus can be also arranged at the bottom of the aerial vehicle. Then, the first communication apparatus can radiate the signal toward the ground more easily and communicate with the base station on the ground more easily.

In some embodiments, the accommodation space 120 can also be arranged at the rear member 104 of the aerial vehicle. For example, the opening of the accommodation space 120 can be arranged at the rear member of the aerial vehicle. Then, the first communication apparatus 10 can be plugged in and out from the rear member of the aerial vehicle.

As shown in FIGs. 3 and 4, in some embodiments, a position-limiting member 121 can also be arranged inside the accommodation space 120. After the first communication apparatus 200 is mounted in the accommodation space 120, the position-limiting member 121 can limit the position of the first communication apparatus 200 to ensure the installation stability of the first communication apparatus at the aerial vehicle.

As shown in FIGs. 2 to 4, in some embodiments, the aerial vehicle 100 also includes a cover 130. The cover 130 can be configured to cover the accommodation space 120. The cover 130 can protect the accommodation space to prevent dust, droplets, etc., from entering the internal space of the aerial vehicle communicated with the accommodation space 120. Additionally, the cover 130 can also protect the first communication apparatus 200 from falling off the aerial vehicle and getting lost.

In some embodiments, the cover 130 can be detachably connected to the housing 110. The cover can form a continuous surface with the housing after being connected to the housing. Then, though the first communication apparatus is mounted at the aerial vehicle, the shape of the aerial vehicle may not change. Thus, the aesthetic appearance of the aerial vehicle and air resistance can be ensured without affecting the performance of the aerial vehicle. The connection manner between the cover and the housing can include snap-fit, adhesive, screw, magnetic, or pivot connections.

The communication connection between the first communication apparatus 200 and the aerial vehicle 100 can be a wired or wireless communication connection. The wired communication connection can be a direct communication connection or an indirect communication connection through another transmission part. As shown in FIGs. 3 and 7, in some embodiments, the aerial vehicle 100 includes a first electrical connector 140, and the first communication apparatus 200 includes a second electrical connector 202. The first electrical connector 140 can communicate with the second electrical connector 202 to allow the aerial vehicle 100 to access the first communication network. The first electrical connector 140 can be arranged inside the accommodation space 120 to prevent the connection member between the aerial vehicle 100 and the first communication apparatus 200 from being exposed to the outside. In some embodiments, the first electrical connector 140 can be a Type-A, Type-B, Type-C, or Lightning connector. The aerial vehicle 100 can be connected to the first communication apparatus through the first electrical connector to access the first communication network.

As shown in FIG. 8, in some embodiments, the first communication apparatus 200 includes a first communication antenna 210 and a signal processing module 220. The first communication antenna 210 can be configured to be connected to the signal processing module 220 to radiate a communication signal sent by the first communication apparatus 200 or receive a communication signal sent to the first communication apparatus 200 by the external device. The first communication antenna 210 can be also connected to the signal processing module 220 and have the capability of radiating and receiving the communication signal to send and receive the communication signals simultaneously. The signal processing module 220 can include a communication module 221, such as a 3G, 4G, 5G, 5.5G, or 6G module, which can be configured to process the signal that needs to be received or transmitted. The signal processing module 220 can also include a matching network 222, which is configured to adjust the impedance between the communication module 221 and the first communication antenna 210 to achieve network matching.

In some embodiments, the first communication antenna 210 and the signal processing module 220 can be detachably connected. That is, the signal processing module 220 can be used as a separate structure, while the first communication antenna 210 can be separately arranged outside of the structure. The first communication antenna 210 can be quickly detached from and connected to the structure. As shown in FIG. 8, the signal processing module 220 typically includes a protective housing 223. The communication module 221 and/or the matching network 222 are usually arranged in the protective housing 223. The protective housing 223 can protect the circuits, chips, and other precision devices of the signal processing module 220 from be damaged by the external environmental. In some embodiments, as shown in FIGs. 5 and 6, the first communication antenna 210 is arranged within the internal space formed by the protective housing. The first communication antenna 210 can be fixedly connected to the aerial vehicle 100, while the signal processing module 220 can be fast-detachably arranged within the accommodation space 120 of the housing 110 of the aerial vehicle 100. That is, the signal processing module 220, as a separate structure, can be easily removed from and mounted onto the aerial vehicle 100, while the first communication antenna 210 can remain at the aerial vehicle.

Thus, as a separate structure, the signal processing module 220 may not include the first communication antenna 210 and have a smaller volume, which allows the housing 110 of the aerial vehicle 100 to accommodate the signal processing module without a large accommodation space, providing more installation space for other members and being beneficial for the miniaturization of the aerial vehicle. Since the first communication antenna is separate from the signal processing module, the first communication antenna may not be limited to the volume of the signal processing module. The aera of the first communication antenna can be larger, Since the efficiency of the antenna is positively correlated with the area of the antenna, the first communication antenna with the larger area can be beneficial to improve the communication quality of the communication of the aerial vehicle using the first communication antenna.

The terms "detachable" or "fast-detachable" can refer to concepts commonly understood in the existing technology, such as to remove manually, remove and mount without specialized tools, remove with less than three steps, etc. In some embodiments, the detachable arrangement can include plugging in and out, magnetic attachment, snap-fit, screw connection, etc.

When the first communication antenna and the signal processing module are fast-detachably connected, in some embodiments, the first communication antenna 210 can be connected to the signal processing module via a feeder line 201. The first end 2011 of the feeder line 201 can be connected to the first communication antenna 210, and the second end 2022 of the feeder line 201 can be connected to the signal processing module 220. For example, the signal processing module 220 can include a third electrical connector 203, and the second end 2022 can be detachably connected to the third electrical connector 203. The connection between the second end 2022 and the third electrical connector 203 can include plug-in, touch point contact, or magnetic attachment.

In some embodiments, the first communication antenna 210 can be fixedly connected to the bottom 102, top 101, or side 105 of the aerial vehicle 100. The first communication antenna 210 can be arranged at the top 101 of the aerial vehicle 100 along with the accommodation space 120 to reduce the length of the feeder line 201.

In some embodiments, the first communication antenna 210 can be arranged at the housing 110. As shown in FIGs. 5 and 6, the housing 110 includes an upper housing 111 and a lower housing 112 detachably connected to the upper housing. The first communication antenna 210 and/or the accommodation space 120 can be arranged at the upper housing 111.

In some embodiments, multiple-input multiple-output (MIMO) antennas can be provided. That is, a plurality of first communication antennas can be provided, which can increase the area of the antenna and can be beneficial for arranging different reception frequency bands. As shown in FIG. 6, at least two first communication antennas 210 are arranged on opposite sides of the upper housing.

In some embodiments, the first communication antenna 210 can be connected to the housing 110 via adhesive, welding, snap-fit, screw connection, or in-mold injection molding. The housing of the aerial vehicle can include an inner wall facing the inside of the aerial vehicle and an outer wall facing the outside of the aerial vehicle. To protect the antenna from being damaged, the first communication antenna can be arranged on the inner wall.

As shown in FIGs. 4 and 6, in some embodiments, the first communication antenna 210 includes a ground member 211, and the aerial vehicle includes a conductive plate 150. The ground member 211 is electrically coupled to the conductive plate 150. The conductive plate 150 is arranged in the internal space of the aerial vehicle 100. Thus, the conductive plate 150 inside the aerial vehicle can be used as the ground of the first communication antenna 210 to increase the grounding area of the first communication antenna, increase the radiation performance of the first communication antenna, and increase the reliability of the aerial vehicle accessing the first communication network. In addition, since the conductive plate of the first communication antenna is used to increase the grounding area, the design flexibility of the first communication antenna can be improved.

The electrical coupling can be achieved in various methods. In some embodiments, as shown in FIG. 6, the conductive plate includes a conductive terminal 151. The ground member 211 can be connected to the conductive terminal 151 to achieve electrical coupling. The ground member 211 can also be implemented in various methods. For example, the ground member 211 can be a metal contact point, the conductive terminal can also be a metal contact point, and the conductive terminal can be connected to the ground member 211 through the metal contact point. In some embodiments, the conductive terminal and/or the ground member 211 can include an elastic contact point. The conductive terminal and the ground member 211 can achieve conductivity through elastic contact. Then, the wiring material connection can be reduced, which is beneficial to reduce the steps of the connection operation and improves the installation efficiency and the connection reliability between of the conductive terminal and the ground member 211. Thus, the user experience can be improved.

In some embodiments, the conductive plate 150 can also be electrically connected to the first communication antenna 210 through wiring.

In some embodiments, the conductive plate can be configured to dissipate heat from the first communication apparatus. Since the first communication apparatus, particularly the signal processing module included in the first communication apparatus, tends to generate heat, an excessive temperature can slow down the processing speed and affect the communication quality. However, since the area of the conductive plate is usually large, the heat of the signal processing module can be dissipated through the conductive plate. Thus, the conductive plate can increase the grounding area for the first communication antenna and dissipate the heat of the first communication apparatus. Then, the utilization rate of the conductive plate can be increased, and another structure for grounding or heat dissipation can be avoided. Therefore, the internal structure of the aerial vehicle can be simplified.

In some implementations, the conductive plate can include a metal layer and a heat dissipation coating applied to the surface of the metal layer. By tightly attaching the conductive plate to the first communication apparatus, the heat dissipation coating and the metal layer can transfer the heat from the first communication apparatus. The heat dissipation coating can be made of graphite or silicone grease, while the metal layer can be made of copper or aluminum.

In some embodiments, to improve the heat dissipation effect of the conductive plate, as shown in FIG. 6, a heat conductor 152 is provided for the conductive plate 150. The heat conductor 152 can abut against the first communication apparatus. In some embodiments, the heat conductor can be an elastic heat conductor. The heat conductor can elastically abut against the first communication apparatus to transfer heat. Thus, even with the impact of the vibration of the aerial vehicle, the conductive plate and the first communication apparatus can still remain in contact to improve the reliability in heat dissipation.

In some embodiments, the cover 130 can also perform heat dissipation on the first communication apparatus. For example, the cover can include a heat dissipation coating, and the first communication apparatus can abut against the heat dissipation coating. In some embodiments, the cover 130 can also include a heat conductor 152. The heat conductor 152 can abut against the first communication apparatus to realize heat conduction. The specific configuration of the heat conductor can be similar to the configuration of the heat conductor on the conductive plate.

In some embodiments, as shown in FIG. 1, the second communication apparatus 300 includes a second communication antenna 310. The second communication antenna 310 is fixedly connected to the inside of the aerial vehicle. The aerial vehicle 100 can transmit or receive the signal of the external device through the second communication antenna 310.

The first communication antenna and the second communication antenna can be microstrip antennas or patch antennas and can be integrated into a circuit board.

In related technologies, a battery can be used as a power supply apparatus for a movable platform such as an aerial vehicle and robot. When the movable platform moves, the battery may need to continuously provide electric power to cause the battery to generate heat continuously. In the related technology, a fan can be provided to dissipate heat for the battery, which increases the volume and weight of the movable platform.

Based on this, the present disclosure also provides a movable platform. The battery can be arranged at the movable platform to supply power to the movable platform. The battery can include a front wall, a rear wall opposite the front wall, and a side wall connecting the front wall and the rear wall. The movable platform can include a head, a tail opposite the head, and a side connecting the head and the tail. After the battery is installed on the movable platform, the front wall can face the head, and the side wall can face the side. The front wall can include an air inlet, and the side wall can include an air outlet. A heat dissipation structure can be arranged in the battery. The heat dissipation structure can form a heat dissipation channel. When the movable platform moves, an airflow can enter the heat dissipation channel from the air inlet and flow out from the air outlet.

As shown in FIGs. 2 and 9, after the battery 600 is installed at the aerial vehicle 100, the battery 600 supplies power to the aerial vehicle 100 to provide power for the flight of the aerial vehicle. The battery 600 includes an outer housing 610. The outer housing 610 includes a front wall 601, a rear wall 602, and a side wall 603. The aerial vehicle 100 includes a head 103, a tail 104, and a side 105. As shown in FIG. 9, the battery 600 can be inserted into the battery compartment 160 of the aerial vehicle from the tail 104 of the aerial vehicle 100. After the battery 600 is mounted to the aerial vehicle 100, the front wall 601 of the battery 600 faces the head 103 of the aerial vehicle 100, the side wall 603 of the battery 600 faces the side 105 of the aerial vehicle 100, and the rear wall 602 of the battery 600 faces the tail 104 of the aerial vehicle 100.

As shown in FIG. 10, an air inlet 611 is provided on the front wall 601 of the battery 600, and an air outlet 612 is provided on the side wall 603. A heat dissipation structure 620 is arranged inside the battery 600. The heat dissipation structure 620 forms a heat dissipation channel 630.

Since the aerial vehicle 100 usually uses the head of the aerial vehicle as a heading direction of the flight, during the flight, the head of the aerial vehicle is usually a wind facing end. Thus, the airflow can enter the heat dissipation channel of the battery through the air inlet and flow out from the air outlet to take away the heat inside the battery by the airflow generated during the flight of the aerial vehicle to dissipate the heat of the battery.

In some embodiments, to allow the airflow to enter the inside of the aerial vehicle more easily and reach the battery, a through-hole can be provided at the head of the aerial vehicle. During the flight of the aerial vehicle, the airflow can easily enter the battery. Similarly, a through-hole can be provided at the side of the aerial vehicle. After the airflow flows out from the air outlet, the airflow can continue to flow out of the aerial vehicle from the through-hole, which improves the heat dissipation efficiency.

In some embodiments, to guide the airflow, the heat dissipation channel can include a plurality of air inlet channels and air outlet channels. As shown in FIG. 10, the heat dissipation channel includes an air inlet channel 631 and two air outlet channels 632. Correspondingly, two air outlets are provided, and the air outlet channels can have a one-to-one correspondence with the air outlets. Thus, after the airflow enters the air inlet channel, the heated airflow can flow out from a plurality of air outlet channels to improve the heat dissipation efficiency.

The air inlet channel and the air outlet channels can be arranged according to the shape of the battery and the position of the battery on the aerial vehicle. In some embodiments, the air inlet channel and the two air outlet channels can be arranged in a "T" or "Y" shape.

To improve heat dissipation efficiency, in some embodiments, as shown in the figures, the width of the air inlet channel can gradually decrease along the direction of airflow, while the width of the air outlet channel can gradually increase. Thus, the airflow can have a compressed effect after entering the air inlet channel, the airflow can have a high speed at the outlet of the air inlet channel to enter the air outlet channel. After the airflow enters the air outlet channel, the width of the air outlet can increase, the flow out area of the heated airflow can be increased, and the heat dissipation speed can be increased.

In some embodiments, the heat dissipation structure can include foam. A plurality of pieces of foam can be arranged in a certain shape to form the heat dissipation channel. In some embodiments, the heat dissipation structure can be arranged on the inner wall of the housing of the battery. For example, a plurality of molding ribs can be formed and arranged in a certain shape to from the heat dissipation channel.

In some embodiments, as shown in FIG. 9, the battery can include at least two battery cells 640 stacked to increase battery capacity and discharge rate. The foam can be arranged between the two battery cells and between the battery housing and the battery cell to form a plurality of heat dissipation structures between the battery cells and enhance the battery heat dissipation efficiency.

Based on this, the present disclosure also provides a movable platform, including a power system and the battery of any of the embodiments above. The battery can supply power to the power system.

Based on this, the present disclosure provides a movable platform system, including a movable platform with a battery compartment. The battery of any of the embodiments above can be installed in the battery compartment to supply power to the movable platform.

In the description of the present disclosure, the orientation or position relationships indicated by the terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential" are based on the orientation or position relationships shown in the accompanying drawings and are merely intended to describe the present disclosure and simplify the description not indicate or imply that the apparatus or element must have the special orientation, or be constructed or operated in a certain orientation, and do not limit the present disclosure.

Furthermore, terms such as "first," "second," etc., are merely used for descriptive purposes and should not be interpreted as indicating or implying relative importance or implicitly specifying the quantity of the indicated technical features. Thus, features associated with "first," "second," etc., may explicitly or implicitly include at least one such feature. In the description of the present disclosure, the term "a plurality of" means at least two, such as two, three, etc., unless otherwise specified.

In the present disclosure, unless otherwise explicitly specified or defined, terms such as "install," "connect," "link," and "fix" should be interpreted broadly. For example, a connection can be fixed, detachable, or integral. The connection can be mechanical or electrical, direct or indirect through an intermediary. The connection can be internal communication or interaction between two elements, unless otherwise specified. For those skilled in the art, the specific meanings of the terms can be understood in the present disclosure according to the specific situations.

In the present disclosure, unless otherwise explicitly specified or defined, the first feature being "on" or "under" the second feature can include that the first feature and the second feature are in direct contact or in indirect contact through an intermediary. Moreover, the first feature being "above," "over," or "on top of" the second feature can include that the first feature is directly above or diagonally above the second feature, or simply that the first feature is at a higher horizontal level than the second feature. The first feature being "below," "under," or "underneath" the second feature can include that the first feature is directly below or diagonally below the second feature, or simply that the first feature is at a lower horizontal level than the second feature.

When an element is "fixed to," "mounted on," "secured to," or "installed on" another element, the element can be directly on the another element, or an intermediate element can be provided between the element and the another element. When an element is considered to be "connected" to another element, the element can be directly connected another element, or an intermediate element can be arranged between the element and the another element. Furthermore, when an element is "fixedly connected" to another element, the connection can be detachable or non-detachable, such as a socket connection, snap-fit, integrated molding, welding, etc., which can be achieved in conventional technology and not be repeated here.

The technical features of the above embodiments can be combined arbitrarily. For the sake of brevity, not all possible combinations of the technical features of embodiments of the present disclosure are described. However, as long as there is no contradiction in the combination of these technical features, the combinations should be within the scope of the present disclosure.

The above embodiments are only some embodiments of the present disclosure, and the description is relatively specific and detailed. However, the description should not be considered as limiting the scope of the present application. For those skilled in the art, without departing from the concept of the present disclosure, several modifications and improvements can be made, all of which shall fall in the scope of the present disclosure.

## Claims

1. An aerial vehicle, the aerial vehicle communicating with an external device through a first communication apparatus and/or a second communication apparatus, wherein, the aerial vehicle is able to access a first communication network through the first communication apparatus and access a second communication network through the second communication apparatus, the first communication network is different from the second communication network;
the aerial vehicle comprising an accommodation space arranged in a housing of the aerial vehicle, at least a part of the first communication apparatus is able to be quickly arranged into and removed from the accommodation space.

2. The aerial vehicle according to claim 1, wherein the first communication network includes a public communication network, and the second communication network is a private communication network.

3. The aerial vehicle according to claim 2, wherein the public communication network includes a mobile communication network and/or a satellite communication network.

4. The aerial vehicle according to claim 3, wherein the mobile communication network includes at least one of a 3G mobile communication network, a 4G mobile communication network, a 5G mobile communication network, a 5.5G mobile communication network, or a 6G mobile communication network.

5. The aerial vehicle according to claim 1, wherein:
when the first communication apparatus is mounted at the aerial vehicle, the aerial vehicle communicates with the external device through the first communication network and/or the second communication network; and
when the first communication apparatus is removed from the aerial vehicle, the aerial vehicle communicates with the external device through the second communication network.

6. The aerial vehicle according to claim 5, wherein the aerial vehicle is able to switch between the first communication network and the second communication network based on communication quality.

7. The aerial vehicle according to claim 6, wherein the aerial vehicle communicates with the external device through the second communication network, and when communication quality of the second communication network does not meet requirements, the aerial vehicle communicates with the external device through the first communication network.

8. The aerial vehicle according to claim 1, wherein a flight restriction when the aerial vehicle communicates through the first communication apparatus is different from a flight restriction when the aerial vehicle communicates through the second communication apparatus.

9. The aerial vehicle according to claim 8, wherein the flight restriction includes at least one of a flight position restriction, a flight altitude restriction, a flight distance restriction, or a flight speed restriction.

10. The aerial vehicle according to claim 1, wherein the first communication apparatus and/or the second communication apparatus are able to transmit at least one of aerial vehicle status information, environment information collected by the aerial vehicle, or control information of the external device.

11. The aerial vehicle according to claim 10, wherein:
the aerial vehicle status information includes altitude, speed, heading, and position of the aerial vehicle;
the environment information collected by the aerial vehicle includes an environment image and a distance between the aerial vehicle and an object; or
the control information of the external device includes a flight control instruction and a control instruction for a load carried by the aerial vehicle.

12. The aerial vehicle according to claim 10, wherein the first communication apparatus and the second communication apparatus transmit different contents.

13. The aerial vehicle according to claim 1, wherein the aerial vehicle is able to communicate with another aerial vehicle through the first communication apparatus.

14. The aerial vehicle according to claim 13, wherein the first communication network is an encrypted network, and a plurality of aerial vehicles communicate through the encrypted network.

15. The aerial vehicle according to claim 1, wherein the external device further includes a third communication apparatus, the third communication apparatus is interchangeable with the first communication apparatus to allow the aerial vehicle to access the first communication network through the third communication apparatus, and the external device communicates with the aerial vehicle through the first communication apparatus.

16. The aerial vehicle according to claim 1, wherein the first communication apparatus includes a first communication antenna and a signal processing module, the first communication antenna and the signal processing module are quickly connected and disconnected, and the signal processing module is quickly arranged into and removed from the accommodation space.

17. The aerial vehicle according to claim 1 or 16, wherein quick installation and removal includes manual removal.

18. The aerial vehicle according to claim 1 or 16, wherein the quick installation and removal includes at least one of a plugging in and out configuration, magnetic attachment configuration, snap-fit configuration, or screw connection configuration.

19. The aerial vehicle according to claim 1, wherein the housing of the aerial vehicle is recessed inward toward the aerial vehicle to form the accommodation space.

20. The aerial vehicle according to claim 19, wherein the accommodation space includes a groove.

21. The aerial vehicle according to claim 1, wherein the aerial vehicle includes a top, a bottom opposite to the top, a head, a tail opposite to the head, and a side connecting to the top, bottom, head, and tail, and the accommodation space is arranged on the top, bottom, head, tail, or side of the aerial vehicle.

22. The aerial vehicle according to claim 21, wherein the bottom of the aerial vehicle is provided with a sensor, and the accommodation space is arranged at the top of the aerial vehicle, or the accommodation space includes an opening, and the opening is arranged at the tail of the aerial vehicle.

23. The aerial vehicle according to claim 1, wherein the accommodation space is provided with a position-limiting member, and the position-limiting member limits position in installation of the first communication apparatus.

24. The aerial vehicle according to claim 1, wherein the aerial vehicle further includes a cover, the cover covers the accommodation space.

25. The aerial vehicle according to claim 24, wherein the cover is detachably connected to the housing, and after the cover is connected to the housing, a continuous surface is formed.

26. The aerial vehicle according to claim 24, wherein the connection method between the cover and the housing includes at least one of a snap connection, an adhesive connection, a screw connection, a magnetic connection, or a pivot connection.

27. The aerial vehicle according to claim 1, wherein the aerial vehicle is provided with a first electrical connection member, the first communication apparatus is provided with a second electrical connection member, the first electrical connection member communicates with the second electrical connection member to connect the aerial vehicle to the first communication network.

28. The aerial vehicle according to claim 27, wherein the first electrical connection member is arranged within the accommodation space.

29. The aerial vehicle according to claim 27, wherein the first electrical connection member includes at least one of a Type-A connector, a Type-B connector, a Type-C connector, or a Lightning connector.

30. The aerial vehicle according to claim 16, wherein the first communication antenna is fixedly connected to the aerial vehicle, the first communication antenna is configured to be connected to the signal processing module to radiate a communication signal sent by the first communication apparatus; and/or the first communication antenna is configured to be connected to the signal processing module to receive a communication signal sent by the external device to the first communication apparatus.

31. The aerial vehicle according to claim 30, wherein the first communication antenna is connected to the signal processing module through a feeder line, a first end of the feeder line is connected to the first communication antenna, and a second end of the feeder line is detachably connected to the signal processing module.

32. The aerial vehicle according to claim 31, wherein the signal processing apparatus includes a third electrical connection member, and the second end is detachably connected to the third electrical connection member.

33. The aerial vehicle according to claim 32, wherein a connection method between the second end and the third electrical connection member includes at least one of a plug-in, touch point contact, or magnetic attachment.

34. The aerial vehicle according to claim 30, wherein the aerial vehicle includes a top, a bottom opposite to the top, a head, a tail opposite to the head, and a side connected to the top, bottom, head, and tail, and the first communication antenna is arranged at the bottom, top, or side of the aerial vehicle.

35. The aerial vehicle according to claim 30, wherein first communication antenna is arranged at the housing.

36. The aerial vehicle according to claim 35, wherein the housing includes an inner wall facing inside of the aerial vehicle and an outer wall facing outside of the aerial vehicle, and the first communication antenna is arranged at the inner wall.

37. The aerial vehicle according to claim 35, wherein the housing includes an upper housing and a lower housing detachably connected to the upper housing, and the first communication antenna and/or the accommodation space are arranged at the upper housing.

38. The aerial vehicle according to claim 37, wherein at least two first communication antennas are provided, and the at least two first communication antennas are arranged on two opposite sides of the upper housing.

39. The aerial vehicle according to claim 35, wherein the connection method between the first communication antenna and the housing includes at least one of via adhesive, welding, snap-fit, screw connection, or in-mold injection molding.

40. The aerial vehicle according to claim 30, wherein the first communication antenna includes a ground member, the aerial vehicle includes a conductive plate, and the ground member is electrically coupled with the conductive plate.

41. The aerial vehicle according to claim 40, wherein the conductive plate is provided with a conductive terminal, and the ground member is connected to the conductive terminal to cause the ground member to be electrically coupled with the conductive plate.

42. The aerial vehicle according to claim 41, wherein the ground member includes a metal contact point, and/or the conductive terminal includes a metal contact point.

43. The aerial vehicle according to claim 40, wherein the conductive terminal and/or the ground member are elastic, and the conductive terminal and the ground member achieve conduction through an elastic contact.

44. The aerial vehicle according to claim 40, wherein the conductive plate is arranged within the internal space of the aerial vehicle.

45. The aerial vehicle according to claim 40, wherein the conductive plate is able to conduct heat for the first communication apparatus.

46. The aerial vehicle according to claim 45, wherein the conductive plate includes a metal layer and a heat dissipation coating, and the heat dissipation coating is coated to a surface of the metal layer.

47. The aerial vehicle according to claim 46, wherein the heat dissipation coating includes graphite and/or silicone grease.

48. The aerial vehicle according to claim 45, wherein the conductive plate is provided with a heat conductor, and the heat conductor abuts against the first communication apparatus.

49. The aerial vehicle according to claim 48, wherein the heat conductor is elastic, and the heat conductor elastically abuts against the first communication apparatus to conduct heat.

50. The aerial vehicle according to claim 24, wherein the cover conducts heat for the first communication apparatus.

51. The aerial vehicle according to claim 50, wherein the cover is provided with a heat dissipation coating, and the first communication apparatus abuts against the heat dissipation coating.

52. The aerial vehicle according to claim 51, wherein a heat dissipation coating is provided with a heat conductor, and the heat conductor abuts against the first communication apparatus to conduct heat.

53. An aerial vehicle system comprising:
the aerial vehicle according to any one of claims 1-52; and
a first communication apparatus, at least a part of the first communication apparatus being quickly arranged into and removed from the aerial vehicle, the aerial vehicle accessing a first communication network through the first communication apparatus.

54. The aerial vehicle system according to claim 53, wherein the aerial vehicle system further includes an external device, and the aerial vehicle communicates with the external device through the first communication apparatus.

55. The aerial vehicle system according to claim 54, wherein the external device includes a remote controller, and the remote controller sends a flight control instruction to the aerial vehicle.

56. A battery, arranged at a movable platform to supply power to the movable platform, wherein the battery includes a front wall, a rear wall opposite to the front wall, and a side wall connecting the front wall and the rear wall, the movable platform includes a head, a tail opposite to the head, and a side connecting the head and the tail, after the battery is arranged at the said movable platform, the front wall of the battery faces the head of the movable platform, and the side wall of the battery faces the side of the movable platform;
wherein, the front wall includes an air inlet, and the side wall includes an air outlet; a heat dissipation structure is arranged inside the battery, the heat dissipation structure forms a heat dissipation channel, and when the movable platform moves, airflow enters the heat dissipation channel through the air inlet and exits through the air outlet.

57. The battery according to claim 56, wherein the heat dissipation channel includes an air inlet channel and at least two air outlet channels.

58. The battery according to claim 57, wherein at least two air outlets are provided, and the air outlet channels have a one-to-one correspondence with the air outlets.

59. The battery according to claim 57, wherein the air inlet channel and the at least two air outlet channels are arranged in a T or Y shape.

60. The battery according to claim 57, wherein along a direction of airflow, a width of the air inlet channel gradually decreases; and/or along the direction of the airflow, the width of the air outlet channel gradually increases.

61. The battery according to claim 56, wherein the heat dissipation structure includes foam, and the foam forms the heat dissipation channel.

62. The battery according to claim 61, wherein the battery includes at least two battery cells, the at least two battery cells are stacked, and the foam is arranged between two battery cells; and/or the foam is arranged between the housing of the battery and the battery cell of the battery.

63. The battery according to claim 56, wherein the head of the movable platform further includes a through hole, and the airflow enters the air inlet through the through hole; and/or
the side of the movable platform further includes a through hole, and the airflow flows out from the through hole through the air outlet.

64. A movable platform, powered by a battery, comprising:
a power system; and
the battery according to any one of claims 56-63, the battery supplying power to the power system.

65. A movable platform system comprising:
a movable platform, the movable platform including a battery compartment;
the battery according to any one of claims 56-63, the battery being mounted in the battery compartment to supply power to the movable platform.
